(19) Europäisches Patentamt
European Patent Office
Office européen des brevets

(11) EP 0 885 934 A1

(12) **EUROPEAN PATENT APPLICATION**

(43) Date of publication:
23.12.1998 Bulletin 1998/52

(51) Int. Cl.$^6$: **C08L 95/00**
// (C08L95/00, 23:08),
(C08L95/00, 53:02),
(C08L95/00, 9:08)

(21) Application number: 98110427.6

(22) Date of filing: 08.06.1998

(84) Designated Contracting States:
AT BE CH CY DE DK ES FI FR GB GR IE IT LI LU MC NL PT SE
Designated Extension States:
AL LT LV MK RO SI

(30) Priority: 17.06.1997 US 877102

(71) Applicant:
EXXON RESEARCH AND ENGINEERING COMPANY
Florham Park, New Jersey 07932-0390 (US)

(72) Inventors:
• Puzic, Olga
  Sarnia, Ontario, N7S 4W9 (CA)
• Williamson, Kenneth E.
  Sarnia, Ontario, N7F 5M1 (CA)

(74) Representative:
Somers, Harold Arnold et al
ESSO Engineering (Europe) Ltd.
Patents & Licences
Mailpoint 72
Esso House
Ermyn Way
Leatherhead, Surrey KT22 8XE (GB)

(54) **Low temperature pavement binders and methods of their preparation**

(57) The invention relates to novel sulfonated polymer modified asphalt-diluent oil binder compositions having enhanced low and high service temperature performance properties and the method of making them, and to road paving asphalts containing them.

EP 0 885 934 A1

Printed by Xerox (UK) Business Services
2.16.6/3.4

**Description**

FIELD OF THE INVENTION

The present invention relates to polymer modified asphalt paving compositions.

BACKGROUND OF THE INVENTION

Asphalt is a viscoelastic semi-solid bituminous material derived from the distillation residue of crude petroleum. Because it has good adhesive and weathering characteristics, it is widely used as a binder or cement for stone or rock aggregate in pavement construction. If, because of the nature of the crude oil distilled, the asphalt is too soft at ambient temperature, a harder product may be manufactured, for example, by extraction of the lighter components with liquid propane or other solvents, or by oxidizing by air blowing at an elevated temperature. However, these manufacturing processes can produce asphalts that are too brittle at low temperature, and result in excessive cracking in cold weather. Another means of stiffening soft asphalt to extend its useful temperature range is by blending with suitable polymers. Polymers can reduce the tendency of an asphalt pavement to creep and rut in warm weather by increasing its high temperature viscoelastic stiffness. Thus, polymers have been added which permit the use of, in some instances, softer grades of asphalt to reduce cracking in cold weather without risking excessive softening in hot weather.

Various methods have been suggested for making such polymer-modified asphaltic paving compositions. For example, U.S. Patent No. 5,348,994 teaches the preparation of storage stable hot mix pavement binder having improved viscoelastic properties _inter alia_ by cosulfonation followed by neutralization of a blend of asphalt and polymer having some unsaturated bonds. However, compositions having both enhanced low and high temperature service properties were not disclosed. Typically, the addition of polymers to asphalts has not been successful in extending the low temperature service properties below -39°C while maintaining high temperature performance of above 70°C. Applicants' invention addresses these deficiencies.

SUMMARY OF THE INVENTION

The present invention provides for a polymer modified asphalt binder composition having enhanced high and low temperature performance, comprising a storage stable sulfonated blend of:

- a petroleum based diluent oil, selected from the group consisting of reprocessed motor oils, gasoline engine oils and industrial oils, in an amount sufficient to maintain the low temperature performance of the polymer modified asphalt of below -39°C to -54°C and maintain high temperature performance of above 70°C;

- a straight run asphalt having a penetration range from 20 to 500 dmm at 25°C;

- a polymer selected from the group consisting of elastomers having at least one diene monomer.

The present invention also provides for a method of enhancing the high and low temperature performance of a road paving polymer modified asphalt, comprising:

- blending a sulfonated polymer modified asphalt with a petroleum based diluent oil selected from the group consisting of reprocessed motor oils, gasoline engine oils and industrial oils, in an amount sufficient to achieve the low temperature performance of the polymer modified asphalt of below -39°C and to maintain high temperature performance of above 70°C, wherein the oil is present in the range of 1-50 wt% of oil to asphalt, wherein the asphalt is a straight run asphalt having a penetration range from 20-500 dmm at 25°C and wherein the polymer is selected from the group consisting of a polymer having at least one diene monomer.

Finally, the present invention provides for road paving materials containing aggregate and the sulfonated polymer modified asphalt binder disclosed herein.

The present invention may suitably comprise, consist or consist essentially of the elements disclosed herein and includes the products produced by the processes disclosed herein.

DETAILED DESCRIPTION OF THE INVENTION

This invention provides for new sulfonated polymer and oil modified asphalt paving compositions, and their methods of preparation and use. The compositions possess significantly enhanced viscoelastic properties in low temperature applications while maintaining the high temperature performance properties of the asphalt binders. Currently, resistance of polymer modified binders to cracking at low temperatures has been limited to temperatures down to between about minus 32°C and minus 39°C (see Table 2, column 4). It has been difficult to achieve cracking resistance without significantly lowering rutting resistance of the polymer modified binders.

It has been discovered that a sulfonated polymer modified asphalt binder system having decreased low temperature stiffness (enhanced resistance to low temperature cracking), and enhanced fatigue resistance can be produced by sulfonating a blend of petroleum based diluent oil, asphalt and polymer, preferably elastomers having at least one diene monomer. Thus, sulfonation can be carried out on the asphalt, polymer and petroleum-based diluent oil blend, or on the asphalt and polymer alone. Thus, diluent oils can be added before or after polymer addition to the asphalt. The amount of the oil can be varied depending on the temperatures at which the binder will be used, typically more oil for lower application temperatures, 1-50%, preferably 1-40%, most preferably 5-30%.

The petroleum based diluent oils suitable for use include paraffinic, naphthenic or aromatic petroleum oil having viscosity lower than starting asphalt, e.g., having viscosity range of 100-250,000 cSt at 40°C. These include, for example, paraffinic oils such as Canthus, reprocessed motor oils, gas engine oils, and industrial oils that do not substantially alter the flash point (less than 250°C) and volatility requirements (less than 1% weight loss on Rolling Thin Film Oven residue test, ASTM D 2872-88) of the finished product binder (1). The amount of diluent oil can be varied to affect the lower limit of the application service temperature. Typical amounts range from 1 wt% to 50 wt%, preferably from 1 wt% to 40 wt%, more preferably from 2 wt% to 35 wt% and most preferably from 5 wt% to 30 wt% of oil to polymer modified asphalt. Greater amounts will typically be added to harder straight run asphalts (e.g., 60/70 penetration grade) than to softer straight run asphalts (e.g., 300/400 penetration grade), with amounts in the 10 to 50 wt% range not uncommon.

Asphalt is a bituminous material remaining after or prepared from the distillation of crude oil. The asphalts used in the present invention may be obtained from a variety of sources of vacuum residua and may be classified by their penetration grade (measured according to ASTM D-5). Typically, the asphalt will have a nominal atmospheric boiling point of at least 350°C and more typically above 440°C. The asphalt is suitably a straight run asphalt of a penetration range from 20-500 dmm 25°C (ASTM D-5).

The polymer is preferably an elastomer, such as styrene-butadiene-styrene (linear or radial triblock), styrene-butadiene diblock, styrene-butadiene rubber, styrene-butadiene latex, butyl rubber or EPDM. Typically polymer is present in the blend in amounts from 1-6 wt%, preferably 2-6 wt%, more preferably 2-4 wt%. The type and amount of polymer added can be used to influence the rutting temperature (i.e., higher polymer content provides greater rutting resistance).

This invention has application in sulfonated polymer modified asphalt systems in which storage stability of the binder and in which high temperature (above 70°C) and low temperature (from below minus 39°C to about minus 54°C) service performance of the binder and polymer modified asphalt paving material is required. Addition of diluent oils to polymer modified asphalts as disclosed herein enhances the low temperature service performance as measured by limiting stiffness temperature according to the test procedure of the American Association of State Highway and Transportation Officials ("AASHTO") Provisional Test Procedure 1-93 (TP1-93) (AASHTO TP1-93) (published in the AASHTO Provisional Standards Book, June 1996) of the binder without affecting high service temperature performance as measured by rutting temperature (AASHTO TP5-93). Table 1 describes "conventional" low temperature criteria (PEN at 4°C, Rolling Thin Film Oven (RTFO) residue). New US Strategic Highway Research Program SHRP specifications came into effect in 1995 using criteria listed in Table 2.

Enhanced low temperature properties of the compositions of the present invention are demonstrated by increased penetration values of the compositions of the present invention (as measured by the Rolling Thin Film Oven residue at 4°C, 200g/60 sec, ASTM D2872-88) in comparison to asphalt alone or a blend of asphalt and polymer sulfonated without diluent oil. Enhancement in low temperature properties, particularly resistance to cracking, is also demonstrated by lower limiting stiffness temperature of the compositions of the present invention (as measured by AASHTO TP1-93, of Rolling Thin Film Oven and Pressure Aging Vessel treated residue) as compared to asphalt alone of similar penetration grade. Enhanced high temperature properties of the compositions of the present invention over asphalt alone are evidenced by higher temperature at which the compositions of the present invention meet minimum stiffness requirements for rutting resistance also called "rutting temperature" (as measured by AASHTO TP5-93). Enhanced fatigue resistance is demonstrated by lower temperature at which the binder reaches $G^* \times \sin \delta = 5000$ kPa (as measured by AASTO TP5-93).

Desirably the oil, polymer and asphalt described herein will be combined in an amounts sufficient to produce a resulting binder composition having a rutting temperature range of about above 70°C preferably 78°C to 82°C. Additionally, it is desired that the binder also have a corresponding cracking temperature range of -40°C to -54°C, a fatigue temperature of about -15°C to +20°C, a penetration at 25°C of about 150 to 200 dmm penetration at 4°C of RTFO residue above 40 dmm, preferably above 60 dmm, and a viscosity at 135°C of about 400-3000 cSt.

The asphalt and polymer and diluent oil are combined to produce a mixture or blend at about 190°C and atmospheric pressure. Stirring, mixing or agitation, using a high shear mixing device are suitable blending methods. The method used will influence the amount of time needed to combine the asphalt, oil and polymer but in any event should be sufficient to distribute the polymer and oil throughout the asphalt. Times may range from 0.5 to 24 hours, according to the method selected as known in the art.

The sulfonating agents for asphalt, polymer and oil may be any suitable sulfonating agents, such as oleum or sulfuric acid, and acyl sulfates as known to those skilled in the art. Preferred sulfonation agents are oleum, sulfuric acid or sulfonic acid in any suitable dilution or in combination with oxidizing agents. The sulfonating agent is typically used in weight ratios of from 1 to 5 wt%, preferably from 1 to 3 wt% of total asphaltic composition (asphalt-polymer-oil blend). Sulfonated polymer modified asphalt may be prepared as known in the art, e.g., U.S. Patent No. 5,549,744. The final properties desired in the polymer modified asphalt binder will influence the choice of sulfonation levels and polymer and oil content within the disclosed ranges. Typically higher sulfonation level will give the product of higher viscosity, lower penetration grade and higher rutting temperature. The sulfonation level typically does not significantly influence cracking temperature. Cracking temperature is, however, affected by the amount and type of oil used. Suitable choices can be made accordingly with these properties in mind.

Depending on the application, flux (e.g., original asphalt) may be added to the polymer modified asphaltic binder composition. The amount of flux to be added will depend on the viscosity of the starting materials and the desired viscosity of the end product and the particular application and is readily determinable by one skilled in the art in view of the teachings herein.

Asphalt is commonly stored, loaded, transported and pumped at high temperatures so that it can be handled as a fluid. It is not always practical to keep an asphalt-polymer blend continuously homogenized before mixing it with aggregate. Consequently, storage stability is necessary to keep the blend from separating under storage conditions. The sulfonated polymer and oil modified asphalts of the present invention also are storage stable (i.e., do not phase separate on standing at an elevated (typically 160°C) temperature for an extended period of time (typically 3-5 days).

When it is used as a pavement binder, asphalt is normally mixed with aggregate typically in a ratio of about 5 wt% asphalt to 95 wt% aggregate, at a temperature at which the asphalt is sufficiently fluid to coat the aggregate particles, typically about 150°C. Aggregate is known to those skilled in the art and suitably is any particulate material used in road paving applications for combination with binder. Any suitable material typically, locally available materials may be used; e.g., rock, stone granite, shells or other suitable high modulus material. The paving composition is made by forming the binder according to the methods disclosed above and mixing the binder with the aggregate or rock. The paving material may be applied to a paving surface according to methods and under conditions known to those skilled in the art to be effective to produce a road paving surface.

The following illustrates the invention:

Example 1:

Cold Lake 300/400 asphalt (1421g) and paraffinic mineral oil Canthus 1000 having viscosity at 40°C of 1000 cSt from Exxon Company USA (349 g) were placed in a metal blender and heated to 195°C while stirring under nitrogen. 54.7 g of styrene-butadiene-styrene (Vector 2411PD (powder) made by Dexco) radial triblock polymer was added. The mixture was blended using low shear at 195°C for 60 minutes. To this blend, 37.9 cc of sulfuric acid (50/50 v/v) was added (1 ml/minute). The sulfonated mixture was stirred and nitrogen purged for additional 1.5 hour.

The polymer modified asphaltic composition had a viscosity of 627 cSt at 135°C and penetration at 25°C of 179 dmm. After 5 days storage at 160°C penetration at 25°C of the top and bottom samples were 173.6 and 174.6 dmm, respectively. A variation of $\leq 3$ penetration units is indicative of storage stability.

Enhanced low temperature properties of the binder of the present invention (Sample A) are demonstrated by higher penetration value (90 dmm) of the Rolling Thin Film Oven (RTFO) residue at 4°C, 200g/60 sec (ASTM D2872-88) as compared to conventional asphalt alone (37 dmm) and asphalt and polymer sulfonated without the oil (Sample B) (35 dmm). Table 1 summarizes these data.

TABLE 1

| Binder | Penetration at 4°C, dmm (200g/60s), RTFO residue |
|---|---|
| Conventional asphalt (Cold Lake 150/200) | 37 |
| Sample B (300/400 Cold Lake + 3% radial SBS + 20 meq $H_2SO_4$ + stoichiometric amount of CaO) | 35 |

TABLE 1 (continued)

| Binder | Penetration at 4°C, dmm (200g/60s), RTFO residue |
|---|---|
| Sample A<br><br>(300/400 Cold Lake + 3% radial SBS + 20% Canthus 1000 + 20 mEq $H_2SO_4$) | 90 |

Enhancement in low temperature properties is also demonstrated by lower limiting stiffness temperature (AASHTO TP1-93) of the RTFO and Pressure Aging Vessel ("PAV") treated residues, as compared to conventional asphalt of comparable penetration grade, Table 2.

Enhanced high temperature properties of the binder of the present invention over conventional asphalt are demonstrated by higher temperature at which RTFO aged binder meets minimum stiffness requirements for rutting resistance also called Rutting Temperature (AASHTO TP5-93), Table 2. Enhanced fatigue resistance is demonstrated by lower temperature at which PAV aged binder reaches $G^* \times \sin \delta = 5000$ kPa (AASTO TP-5-93).

TABLE 2

| Asphalt Composition Properties | Conventional 150/200 Grade Asphalt[4] (Typical) | Sample A[5] | Sample B[6] |
|---|---|---|---|
| **Fresh Binder** | | | |
| Penetration 25°C, dmm | 175 | 179 | 101 |
| Viscosity 135°C, cSt | 248 | 627 | 1062 |
| **Aged Binder** | | | |
| Penetration 4°C, dmm (200g/60 sec) RTFO residue | 37 | 90 | 35 |
| Cracking Temperature, °C[1] RTFO/PAV residue | - 32 | - 49 | - 36 |
| Rutting Temperature, °C[2] | 59 | 70 | 78 |
| Fatigue Temperature, °C[3] | 15 | - 11 | 9 |
| **Volatility** | | | |
| Flash point, °C | 286 | 270 + | 270 + |
| RTFO wt% loss | 0.26 | 0.59 | 0.80 |

(1) Limiting Stiffness Temperature (LST) -10°C. LST = Temperature at which Stiffness at 60 sec = 300 MPa
(2) Temperature at which $G^*/\sin \delta = 2.2$ kPa on RTFO aged sample
(3) Temperature at which $G^* \times \sin \delta = 5000$ kPa on RTFO/PAV aged sample
(4) Conventional (Comparative): Cold Lake 150/200 penetration grade
(5) Sample A: as described in Example 1 and Table 1 (binder of the present invention)
(6) Sample B (Comparative): as described in Table 1 (cosulfonated polymer modified asphalt without oil)

## Claims

1. A polymer modified asphalt binder composition having enhanced high and low temperature performance, comprising a storage stable sulfonated blend of:

   - a petroleum based diluent oil, selected from the group consisting of reprocessed motor oils, gasoline engine oils and industrial oils, in an amount of from 1 to 50 wt% of oil to total composition sufficient to maintain the low temperature performance of the polymer modified asphalt in a range of below -40°C to -54°C and to maintain high temperature performance of above 70°C;

   - a straight run asphalt having a penetration range of from 20/500 dmm;

   - a polymer selected from the group consisting of elastomers having at least one diene monomer.

2. The composition of claim 1 wherein the blend of oil, asphalt and polymer is sulfonated.

3. The composition of claim 1 wherein the asphalt and polymer are sulfonated.

4. The composition of claim 2 or claim 3 wherein the sulfonation level is in a range of from 1-5 wt% of total composition.

5. The composition of any one of claims 1 to 4 wherein the polymer is present in the range of from 1-6 wt% polymer to total composition.

6. The composition of any one of claims 1 to 5 wherein the elastomers are selected from the group consisting of styrene-butadiene-styrene, styrene-butadiene diblock, butyl rubber, styrene butadiene latex and EPDM.

7. A method of enhancing the high and low temperature performance of a road paving polymer modified asphalt, comprising:

   - blending a sulfonated polymer modified asphalt with a petroleum based diluent oil selected from the group consisting of reprocessed motor oils, gasoline engine oils and industrial oils, in an amount sufficient to maintain the low temperature performance of the polymer modified asphalt in a range of below -40°C to -54°C and to maintain high temperature performance of above 70°C, wherein the oil is present in the range of from 1-50 wt% of oil to asphalt, wherein the asphalt is a straight run asphalt having a penetration range of from 20-500 dmm and wherein the polymer is selected from the group consisting of elastomers having at least one diene monomer.

8. A road paving asphalt composition, comprising:

   - aggregate in the amount of from 93 to 96 wt%; and

   - the balance by weight of a polymer modified asphalt binder containing a sulfonated blend of a petroleum based diluent oil, selected from the group consisting of reprocessed motor oils, gasoline engine oils and industrial oils, in an amount sufficient to maintain low temperature performance of the polymer modified asphalt in a range of below -40°C to -54°C and to maintain high temperature performance of above 70°C, wherein the oil is present in a ratio of from 1-50 wt% of oil to total composition; a straight run asphalt having a penetration range of from 20-500 dmm; and a polymer selected from the group consisting of elastomers having at least one diene monomer.

9. The composition of claim 8 wherein the oil, polymer and asphalt are sulfonated.

10. The composition of claim 8 wherein the polymer and asphalt are sulfonated before oil addition.

European Patent
Office

**EUROPEAN SEARCH REPORT**

Application Number

EP 98 11 0427

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | WO 97 09390 A (EXXON RESEARCH ENGINEERING CO) 13 March 1997<br>* claims * | 1-10 | C08L95/00<br>//(C08L95/00,<br>23:08),<br>(C08L95/00,<br>53:02),<br>(C08L95/00,<br>9:08) |
| Y | WO 97 16491 A (EXXON RESEARCH ENGINEERING CO) 9 May 1997<br>* claims *<br>* page 9, paragraph 3 * | 1-10 | |
| Y | EP 0 422 315 A (NYNAES NV) 17 April 1991<br>* page 2, line 51 - page 4, line 25 *<br>* claims * | 1-10 | |
| Y | US 4 547 399 A (FUJIHARA DECEASED YOSHIKI ET AL) 15 October 1985<br>* claims * | 1-7 | |
| Y | EP 0 380 384 A (PAVAGE ET ASPHALTES)<br>1 August 1990<br>* page 2, line 6 - page 2, line 56 *<br>* page 3, line 50 - page 4, line 48 * | 1-7 | TECHNICAL FIELDS SEARCHED (Int.Cl.6) |
| Y | EP 0 174 795 A (EXXON FRANCE)<br>19 March 1986<br>* claims *<br>* page 3, line 21 - page 4, line 14 *<br>* page 7, line 12 - page 8, paragraph 2 * | 1-7 | C08L |

The present search report has been drawn up for all claims

| Place of search | Date of completion of the search | Examiner |
|---|---|---|
| THE HAGUE | 18 September 1998 | Leroy, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)